# EUROPEAN PATENT SPECIFICATION

(11) **EP 1 944 519 B1**
(45) Date of publication and mention of the grant of the patent: **15.05.2013**
(21) Application number: 08250106.5
(22) Date of filing: 10.01.2008
(51) Int. Cl.: F16D 25/08, F16D 48/02

(54) **Clutch operating device**
Kupplungsbetätigungsvorrichtung
Dispositif de commande d'un embrayage

(30) Priority: 11.01.2007 JP 2007003790
(43) Date of publication of application: 16.07.2008
(73) Proprietor: TOYOTA JIDOSHA KABUSHIKI KAISHA, Toyota-shi, Aichi-ken, 471-8571 (JP)
(72) Inventor: Takeuchi, Shinichi, Toyota-shi, Aichi-ken 471-8571 (JP); Hoshihara, Kotaro, Toyota-shi, Aichi-ken 471-8571 (JP)
(74) Representative: Albutt, Anthony John

(56) References cited:
- EP-A1- 0 065 391
- DE-A1- 10 105 259
- US-A- 4 653 533
- ANONYMOUS: "Variable orifice for manual transmission clutch control", RESEARCH DISCLOSURE, MASON PUBLICATIONS, HAMPSHIRE, GB, vol. 313, no. 17, 1 May 1990 (1990-05-01), XP007115060, ISSN: 0374-4353

## Description

The present invention relates to a clutch operation device engaging and disengaging a clutch, transmitting and cutting-off drive force from a drive source, by way of transmission of operation force by a hydraulic cylinder.

In general, when an automobile fitted with a manual transmission is to be moved off from standstill or when the gear setting of the transmission thereof is to be changed, the driver depresses the clutch pedal by foot so as to perform an operation of engaging and disengaging the clutch and torque is transmitted between the engine and the transmission. For example, items providing a clutch master cylinder, a clutch release cylinder, and other hydraulic cylinders are widely known as a clutch operation device engaging and disengaging this type of clutch. In a clutch operation device comprising a clutch master cylinder, the hydraulic pressure generated by the clutch master cylinder changes in accordance with a degree of a depression operation of the clutch pedal. Pursuant to this, a degree of clutch engagement (that is, clutch transmission capacity) changes between a fully engaged full-engagement condition and a fully disengaged full-disengagement condition.

It should be noted that, when the depression operation is suddenly released as a result of the driver detaching his/her foot from the clutch pedal during, for example, a sudden standing start, the clutch immediately changes from the full-disengagement condition to the full-engagement condition and is suddenly engaged. However, when this type of sudden clutch engagement occurs, the torque input to the transmission and other components of the automobile's torque transmission system becomes excessively large, and as a result thereof, shock also increases. Consequently, this leads to deterioration of the clutch mechanism and the gear-changing mechanism.

For example, a technique disclosed in Japanese Patent No. 2842069 has been proposed as a technique for avoiding the aforementioned sudden clutch engagement. Said patent document discloses a method whereby, in a clutch release cylinder, a return speed of a piston is slowed only for an instant between the full-disengagement condition and the full-engagement condition of the clutch by changing the resistance to the transmission of oil in accordance with the positional relationship of the piston with respect to three oil-transmitting portions in the form of an oil channel disposed in parallel with the cylinder and having an opening section provided on the cylinder wall surface, an orifice, and an oil hole capable of opening and closing using a valve. DE 10105259 relates to a hydraulic clutch actuating device. This document does not disclose at least that within the cylinder body, a guide means for guiding the motion of the moveable member is provided, and the moveable member is sandwiched between the guide means and an inner wall of the cylinder body.

However, the construction used for changing the resistance to transmission of oil in the aforementioned example of the conventional technology in order to slow the return speed of the piston was complicated. Furthermore, as the construction opened and closed the oil hole by pressing on a valve using a protrusion section provided on the piston and opposing the elastic force of a spring, components such as the spring were separately needed. In addition, as the protrusion section and the valve made contact, consideration had to be given to contact wear. Furthermore, as a conical shaped section of the valve was pressed into the oil hole so as to close the oil hole in the construction, consideration also had to be given to sealing properties when the oil hole was closed using the valve.

In view of this type of problem, the present disclosure seeks to provide a clutch operation device of a simple construction and capable of reducing shock occurring pursuant to sudden engagement of the clutch.

Aspects of the invention are defined in the appended claims.

The present disclosure is configured as follows as a means of solving the aforementioned problems. That is to say, an example of the present disclosure is configured such that, in a clutch operation device engaging and disengaging a clutch transmitting and cutting-off drive force from a drive source by way of transmission of operation force by a hydraulic cylinder, the hydraulic cylinder comprises a cylinder body having formed on a wall surface thereof an opening section connecting an oil chamber and an oil channel returning oil from a clutch side, a piston capable of performing stroke motion inside the cylinder body between an end section side corresponding to a clutch full-disengagement condition and another end section side corresponding to a clutch full-engagement condition, and a moveable member fixed to the piston and moving along the wall surface inside the cylinder body pursuant to the stroke motion of the piston; the moveable member is provided with an opening section connecting to the oil chamber at a position of overlapping thereof with the opening section of the cylinder body; and an area of a connecting channel formed by mutual overlapping of the opening section of the cylinder body and the opening section of the moveable member becomes smaller when the stroke-motion position of the piston is between both of the end sections than when the stroke-motion position of the piston is at either end section.

The above-explained configuration can be applied to the hydraulic cylinder of, for example, a clutch master cylinder or a clutch release cylinder. With this configuration, oil returns via the oil return channel upon an engagement operation of the clutch. At this time, the area of the aforementioned connecting channel changes in accordance with the stroke-motion position of the piston, and the volume of flow per unit time of oil returning via the connecting channel also changes. More specifically, the volume of flow per unit time of oil returning via the aforementioned connecting channel becomes smaller when the stroke-motion position of the piston is between both of the end sections than when the stroke-motion position is at either end section. As a result thereof, the degree of clutch engagement changes between the full-disengagement condition and the full-engagement condition of the clutch can be changed so as to achieve clutch engagement profiles of a range of different stepped patterns so that the degree of clutch engagement does not increase uniformly at the same speed.

Consequently, the clutch does not immediately change from the full-disengagement condition to the full-engagement condition thereof, and the full-engagement condition is reached through gradual engagement of the clutch (that is, a condition wherein the stroke-motion position of the piston is between both of the end sections). As a result thereof, the shock pursuant to sudden clutch engagement can be reduced without the need for complicated constructions or control. Furthermore, as the aforementioned connecting channel is not constricted immediately after the start of a clutch engagement operation (that is, when the stroke-motion position of the piston is at an end section side), in contrast to a case wherein the area of the connecting channel is constricted by a fixed orifice, the torque input to the transmission immediately after the start of a clutch engagement operation can be quickly increased. As a result thereof, excellent response can be assured when the vehicle is moved off.

In the present disclosure, it is preferable that one opening section of the opening section of the cylinder body and the opening section of the moveable member be formed so as to extend in the direction of stroke motion of the piston, that this opening section be provided with a wide section at both ends thereof in the direction of stroke motion and a narrow section being between both of the wide sections, and that the width of the other opening section of the opening section of the cylinder body and the opening section of the moveable member be larger than the width of the narrow section of the aforementioned one opening section. Furthermore, it is preferable that the aforementioned one opening section be the opening section of the moveable member and that the aforementioned other opening section be the opening section of the cylinder body.

In this way, by optimizing the shape of the opening section of the cylinder body or the shape of the opening section of the moveable member, the volume of flow per unit time of oil returning via the aforementioned connecting channel can be changed by changing the area of the connecting channel. As a result thereof, the clutch engagement profile can be changed so as to have a stepped pattern, and the shock occurring pursuant to sudden engagement of the clutch can be reduced.

Furthermore, in the present disclosure, it is preferable that the opening edges of both of the wide sections of the aforementioned one opening section on the side of the narrow section be formed so as to extend in a transverse direction, and that the opening edges on the side of both ends of the aforementioned other opening section in the direction of stroke motion of the piston be formed so as to extend in a transverse direction. For example, both wide sections of the aforementioned one opening section and the aforementioned other opening section may be formed having a rectangular shape. As a result thereof, the period during which the other opening section overlaps the wide sections and the narrow section of the one opening section in a straddled manner becomes shorter. That is to say, the period during which the area of the aforementioned connecting channel changes becomes shorter. Consequently, a reduction of shock pursuant to sudden clutch engagement and excellent responsiveness upon standing starts can both be achieved.

In the present disclosure, within the cylinder body, a guide means is provided for guiding the motion of the moveable member, and the moveable member is sandwiched between the guide means and an inner wall of the cylinder body. As a result thereof, motion of the moveable member in the direction of flow of the oil (for example, lifting of the moveable member) upon the return of oil via the aforementioned connecting channel can be prevented. Consequently, the volume of flow per unit time of oil returning via the connecting channel can be reliably and accurately controlled.

Furthermore, it is preferable that the guide means comprise a plate-like member provided so as to cover the opening section of the moveable member, that the plate-like member be fixed to the cylinder body, that an opening section be formed in the plate-like member, and that the full region of the opening section of the cylinder body be contained within the opening section of the plate-like member. As a result thereof, the flow of oil returning via the aforementioned connecting channel is not obstructed by the plate-like member, constituting a guide means, and the oil can return smoothly.

With the present disclosure, the area of the connecting channel formed by overlapping of the opening section of the cylinder body and the opening section of the moveable member changes in accordance with the stroke-motion position of the piston upon an engagement operation of the clutch, and therefore, the volume of flow per unit time of oil returning via the connecting channel also changes. More specifically, the volume of flow per unit time of oil returning via the aforementioned connecting channel becomes smaller when the stroke-motion position of the piston is between both of the end sections than when the stroke-motion position is at either end section. As a result thereof, the degree of clutch engagement does not increase uniformly at the same speed between the full-disengagement condition and the full-engagement condition of the clutch, and the clutch engagement profile is changed to a stepped pattern. Consequently, the clutch does not immediately change from the full-disengagement condition to the full-engagement condition thereof, and the full-engagement condition is reached through gradual engagement of the clutch. As a result thereof, the shock pursuant to sudden clutch engagement can be reduced without the need for complicated constructions or control.

### BRIEF DESCRIPTION OF THE DRAWINGS

FIG. 1 is a perspective view showing a schematic configuration of a clutch operation device according to an embodiment of the present invention.
FIG. 2 is a side sectional view showing a clutch master cylinder of the clutch operation device of FIG. 1.
FIG. 3 is a plan sectional view showing the clutch master cylinder of the clutch operation device of FIG. 1 when the clutch is in a full-disengagement condition.
FIG. 4 is a plan sectional view showing the clutch master cylinder of the clutch operation device of FIG. 1 when the clutch is in a full-engagement condition.
FIG. 5 is a perspective view showing a slide member and a guide member, etc. contained within the clutch master cylinder of the clutch operation device of FIG. 1.
FIG. 6A through FIG. 6E are views showing an operation of the slide member upon an engagement operation of the clutch in the clutch operation device of FIG. 1 and also showing changes in an area of a connecting channel.
FIG. 7 is a view showing changes over time of a degree of engagement of the clutch in the clutch operation device of FIG. 1.
FIG. 8 is a view showing changes over time in torque input to a transmission upon sudden engagement of the clutch in the clutch operation device of FIG. 1.
FIG. 9 is a perspective view showing an example of a change of shape of the opening section of the cylinder body, the slide member, and the guide member of the clutch master cylinder of the clutch operation device of FIG. 1.

### REFERENCE NUMERALS

- 10: clutch operation device
- 20: clutch pedal
- 30: clutch master cylinder
- 31: cylinder body
- 31a: oil chamber
- 31c: opening section
- W1: width of opening section
- 32: piston
- 36: slide member
- 36a: opening section
- 36b, 36d: wide section
- Wb, Wd: width of wide section
- 36c: narrow section
- Wc: width of narrow section
- 37: guide member
- W3: width of opening section
- Z1: connecting channel
- 38a, 38b: oil channel
- 39a, 39b: check valve
- 50: clutch cover
- 60: clutch release cylinder

### BEST MODE FOR CARRYING OUT THE INVENTION

The following is a description of a preferred embodiment of the present invention, with reference to accompanying drawings. Hereinafter, a clutch operation device provided in an automobile fitted with a manual transmission will be explained as an example of an embodiment of the present invention. Furthermore, in the following example, application of the present invention to a clutch master cylinder provided in the clutch operation device will be explained.

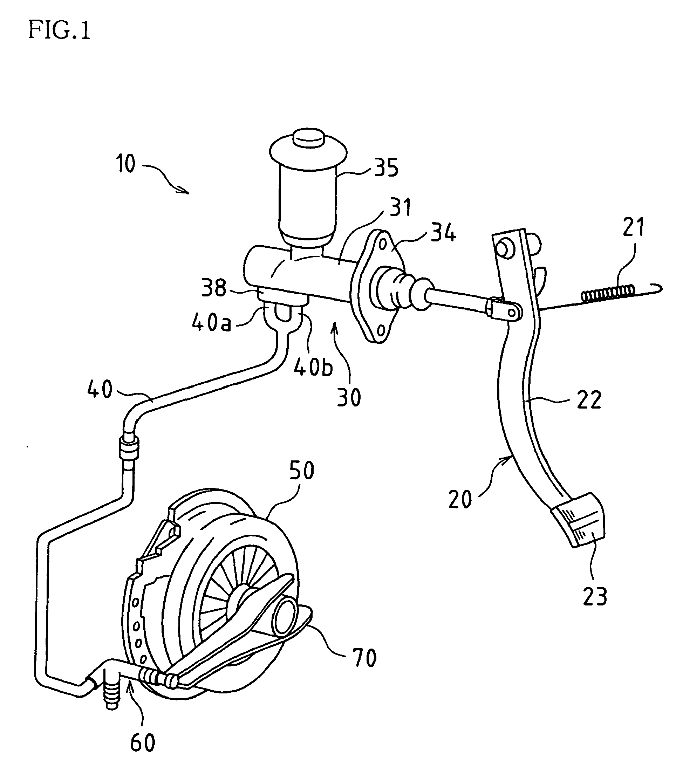

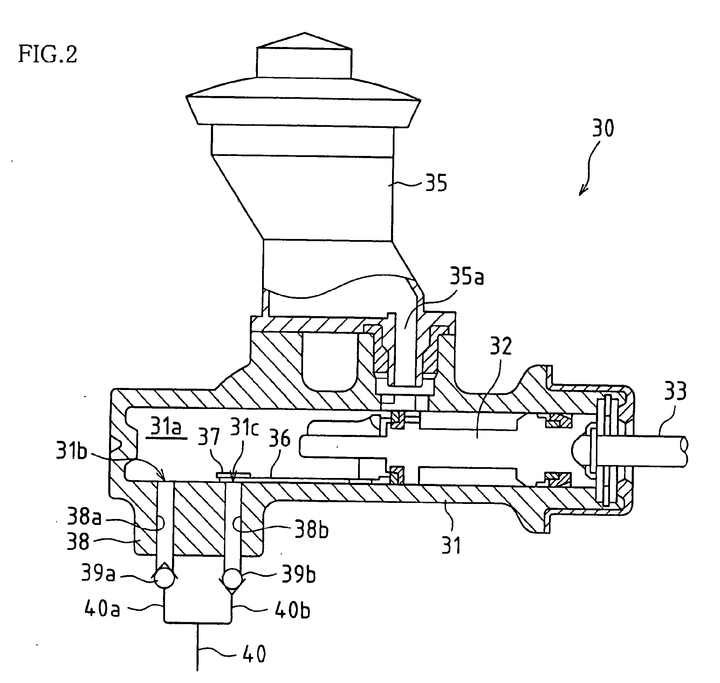

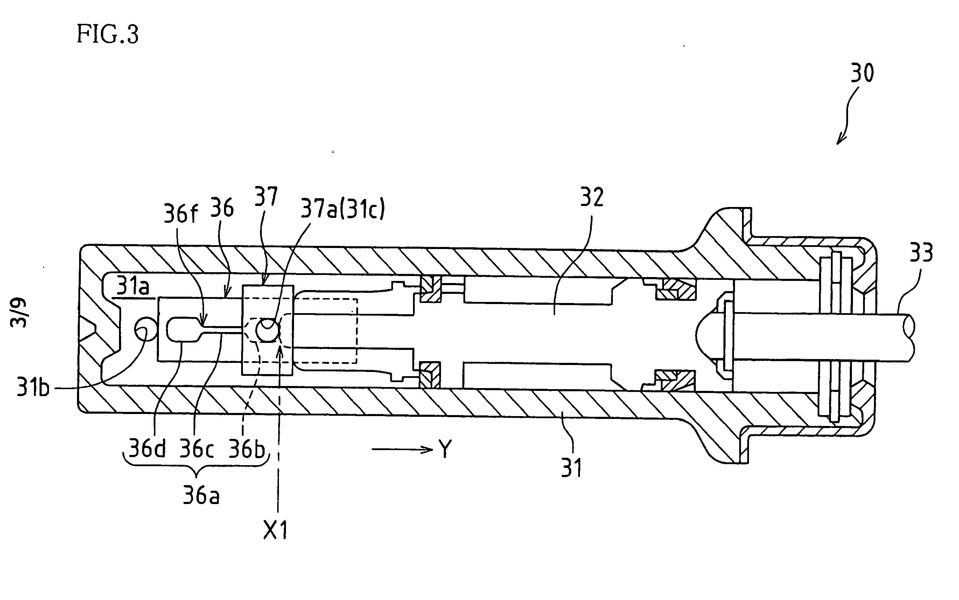

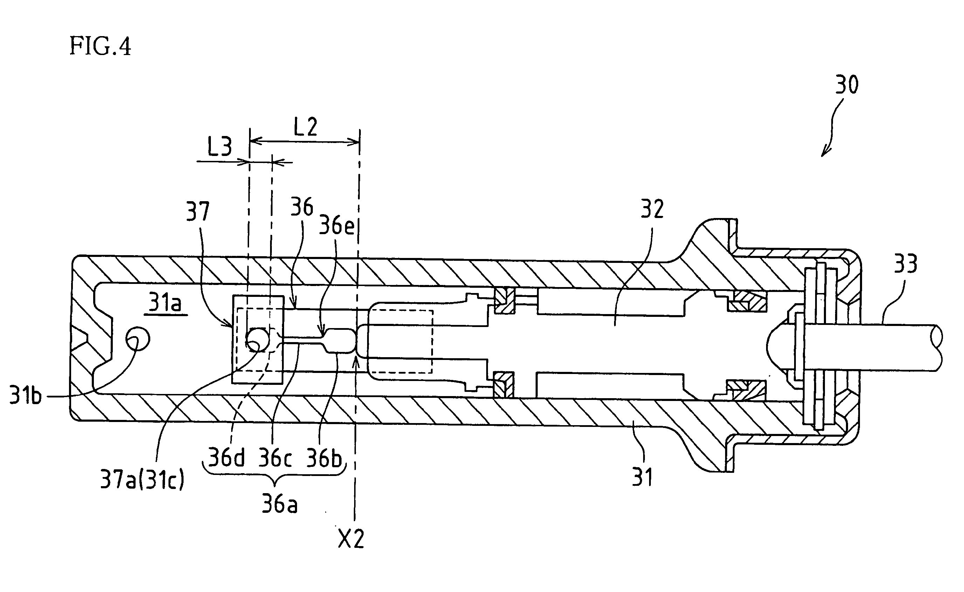

FIG. 1 is a perspective view showing a schematic configuration of a clutch operation device according to an embodiment of the present invention. FIG. 2 is a side sectional view showing a clutch master cylinder of the clutch operation device. FIG. 3 and FIG. 4 are plan sectional views showing a clutch master cylinder of the clutch operation device.

As shown in FIG. 1 through FIG. 4, the clutch operation device 10 comprises a clutch pedal 20, a pedal return spring 21, a clutch master cylinder 30, a flexible hose 40, a clutch cover 50, a clutch release cylinder 60, and a release fork 70.

The clutch pedal 20 comprises a pedal lever 22 formed as one with a pedal section 23 disposed at a lower end section of the pedal lever 22 as a depression section. Furthermore, a position on the pedal lever 22 in close proximity to an upper edge thereof is supported so as to be capable of freely rotating about a horizontal axis by a clutch pedal bracket (not shown) mounted on a dash panel separating the passenger compartment from the engine compartment. An impelling force is applied to the pedal lever 22 by the pedal return spring 21 in a direction of rotation towards a driver. As explained hereinafter, a clutch release operation occurs as a result of the driver performing a depression operation on the pedal section 23 against the impelling force of the pedal return spring 21. In addition, a clutch engagement operation occurs as a result of the driver releasing the depression operation of the pedal section 23.

The clutch master cylinder 30 is configured having components such as the piston 32 assembled into the cylinder body 31. An end of a push rod 33 is connected to an end face of the piston 32 at the passenger-compartment side thereof, and another end of the push rod 33 (an end on the passenger-compartment side thereof) is connected to the pedal lever 22. An oil chamber 31a is a space inside the cylinder body 31 disposed therein at an opposite side to the connection of the push rod 33 of the piston 32. That is to say, the interior of the cylinder body 31 is partitioned by the piston 32 into the oil chamber 31a and a space wherein the push rod 33 is disposed.

Clutch fluid (that is, oil) is injected into the oil chamber 31a from a reservoir tank 35 disposed at an upper section of the cylinder body 31 and via an oil supply port 35a. A connection section 38 connected to the flexible hose 40 is provided as one with the cylinder body 31. Oil channels 38a, 38b connecting the interior of the oil chamber 31a to the interior of the flexible hose 40 are provided in the connection section 38. An explanation of the connection section 38 is provided hereinafter.

The piston 32 is capable of performing stroke motion inside the cylinder body 31 between a position X1 (shown in FIG. 3) at an end section side corresponding to the clutch full-disengagement condition and a position X2 (shown in FIG. 4) at another end section side corresponding to the clutch full-engagement condition. Operation force resulting from the depression operation of the clutch pedal 20 by the driver is transmitted from the pedal lever 22 to the push rod 33, and the piston 32 performs stroke motion inside the cylinder body 31 towards an end section side. Consequently, hydraulic pressure is generated inside the oil chamber 31a of the cylinder body 31. The depression operation force of the clutch pedal 20, having been converted into hydraulic pressure by the clutch master cylinder 30, is transmitted to the clutch release cylinder 60, as described hereinafter.

The clutch operation device 10 is configured such that the hydraulic pressure generated by the clutch cylinder 30 changes in accordance with the stroke-motion position (that is, the axial direction position) of the piston 32 inside the cylinder body 31. Specifically, the larger the degree of depression of the clutch pedal 20, the larger the depression operation force of the clutch pedal 20 transmitted to the piston 32 via the push rod 33, and consequently, the stroke-motion position of the piston 32 moves towards the aforementioned end section side. As a result, the hydraulic pressure generated inside the oil chamber 31a of the cylinder body 31 becomes larger. At this time, oil is delivered from the clutch master cylinder 30 to the clutch release cylinder 60.

In contrast, the smaller the degree of depression of the clutch pedal 20, the smaller the depression operation force of the clutch pedal 20 transmitted to the piston 32 via the push rod 33, and consequently, the stroke-motion position of the piston 32 moves towards the aforementioned other end section side. As a result, the hydraulic pressure generated inside the oil chamber 31a of the cylinder body 31 becomes smaller. At this time, oil is returned from the clutch release cylinder 60 to the clutch master cylinder 30.

It should be noted that a flange 34 is provided on an outer periphery of the cylinder body 31 at an end section thereof on the passenger-compartment side, and by fixing this flange 34 using bolts to the aforementioned dash panel, the clutch master cylinder 30 is supported by the vehicle body. A detailed explanation of the internal construction of this clutch master cylinder 30 is provided hereinafter.

The hydraulic pressure generated by the clutch cylinder 30 is transmitted to the clutch release cylinder 60 by the oil in the flexible hose 40. A channel of the flexible hose 40 on the side of the clutch master cylinder 30 is formed with a forked shape comprising branch oil channels 40a, 40b. One of the branch oil channels 40a is used for sending of oil from the clutch master cylinder 30 to the clutch release cylinder 60, and in contrast, the other branch oil channel 40b is used for the return of oil to the clutch master cylinder 30 from the clutch release cylinder 60.

The branch oil channels 40a, 40b of the flexible hose 40 are each connected to oil channels 38a, 38b provided inside the connection section 38 formed as one with the cylinder body 31 of the clutch master cylinder 30. The oil channels 38a, 38b each communicate into the oil chamber 31a via hereinafter-explained opening sections 31b, 31c of the cylinder body 31 of the clutch master cylinder 30. Furthermore, check valves 39a, 39b are each interposed between the oil channels 38a, 38b and the branch oil channels 40a, 40b.

One of the oil channels 38a is connected to one of the branch oil channels 40a of the flexible hose 40 via the check valve 39a. As a result, oil is permitted to flow from the clutch master cylinder 30 to the clutch release cylinder 60 but blocked from flowing from the clutch release cylinder 60 to the clutch master cylinder 30. Accordingly, the oil channel 38a is a dedicated channel for oil delivery.

Meanwhile, the other oil channel 38b is connected to the other branch oil channel 40b of the flexible hose 40 via the check valve 39b. As a result, oil is blocked from flowing from the clutch master cylinder 30 to the clutch release cylinder 60 but permitted to flow from the clutch release cylinder 60 to the clutch master cylinder 30. Accordingly, the oil channel 38b is a dedicated channel for oil return.

Although not shown in detail in the figures, the clutch release cylinder 60 is configured in the same way as the above-explained clutch master cylinder 30 with components such as a piston assembled into a cylinder body. The interior of the cylinder body is partitioned by the piston into an oil chamber connected to the interior of the flexible hose 40 and a space wherein a rod operating a release fork 70 is disposed. The clutch release cylinder 60 receives oil pressure from the oil fed from the clutch master cylinder 30 via the flexible hose 40, and as a result, the release fork 70 is operated. Consequently, the clutch cover 50 is moved forward and backward with respect to a clutch disk, not shown in the figures.

Here, the piston of the clutch release cylinder 60 is capable of performing stroke motion inside the cylinder body between a position at an end section side corresponding to the clutch full-disengagement condition and a position at another end section side corresponding to the clutch full-engagement condition. The stroke-motion position of the piston of the clutch release cylinder 60 changes in accordance with the hydraulic pressure received by the piston. The stroke-motion position of the piston of the clutch release cylinder 60 corresponds to the stroke-motion position of the piston 32 of the clutch master cylinder 30 explained above. For example, the position at the aforementioned end section side of the piston of the clutch release cylinder 60 corresponds to the position X1 at the end section side of the piston 32 of the clutch master cylinder 30. In addition, the position at the aforementioned other end section side of the piston of the clutch release cylinder 60 corresponds to the position X2 at the other end section side of the piston 32 of the clutch master cylinder 30.

The operation position of the release fork 70 changes in accordance with the stroke-motion position of the piston of the clutch release cylinder 60, making it possible for the engagement and disengagement operation of the clutch to be performed. Specifically, when the hydraulic pressure received by the piston of the clutch release cylinder 60 increases, the stroke-motion position of the piston moves towards the aforementioned end section side. As a result, the release fork 70 moves in a direction of separation of the clutch cover 50 from the clutch disk. Pursuant to this operation of the release fork 70, the clutch cover 50 gradually separates from the clutch disk and the clutch disengagement operation proceeds. When the stroke-motion position of the piston of the clutch release cylinder 60 has changed to the position of the aforementioned end section side, the clutch reaches the fully disengaged full-disengagement condition.

Conversely, when the hydraulic pressure received by the piston of the clutch release cylinder 60 decreases, the stroke-motion position of the piston moves towards the aforementioned other end section side. As a result, the release fork 70 moves in a direction of engagement of the clutch cover 50 with the clutch disk. Pursuant to this operation of the release fork 70, the clutch cover 50 gradually engages with the clutch disk and the clutch engagement operation proceeds. When the stroke-motion position of the piston of the clutch release cylinder 60 has changed to the position of the aforementioned other end section side, the clutch reaches the fully engaged full-engagement condition. It should be noted that, while a widely-known dry plate clutch is a typical example of a specific configuration of a clutch including the clutch cover 50, the release fork 70, and the clutch disk, etc., other configurations may also be used.

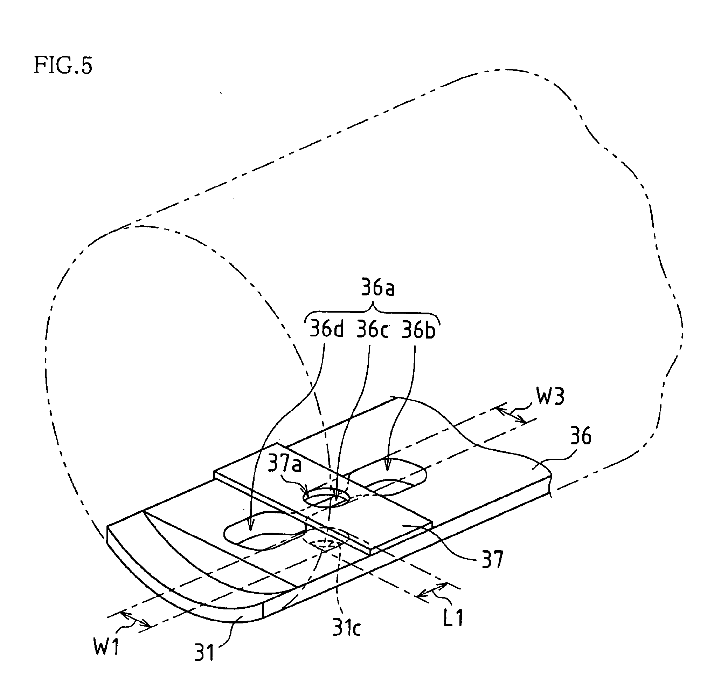

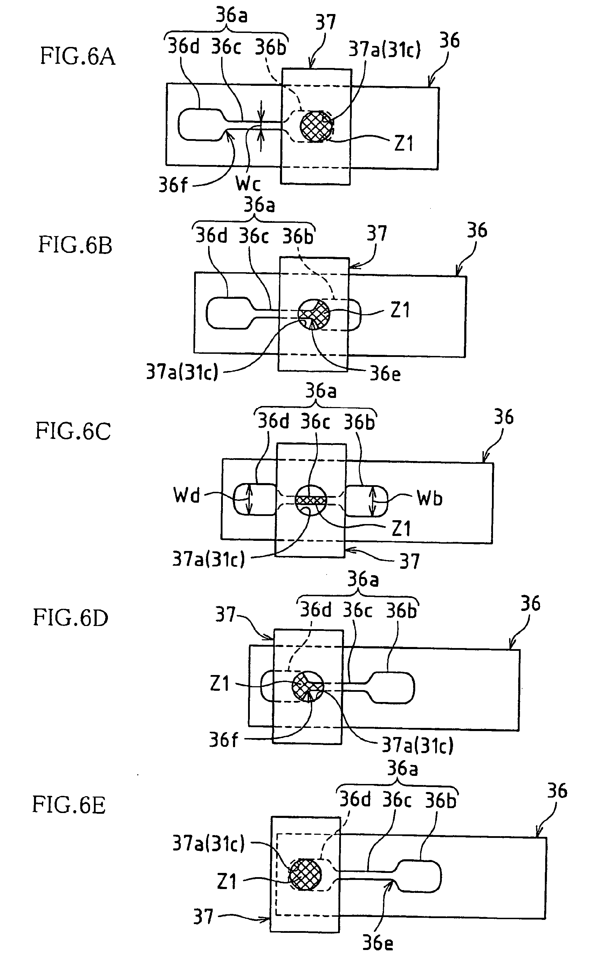

Next, the internal configuration of the clutch master cylinder 30 of the clutch operation device 10 is explained in detail by way of reference to FIG. 1 through FIG. 6E. FIG. 5 is a perspective view showing a slide member and a guide member, etc. of the interior of a clutch master cylinder. FIG. 6A through FIG. 6E are views showing an operation of the slide member upon an engagement operation of the clutch and also showing changes in an area of a connecting channel. It should be noted that FIG. 6A through FIG. 6E show only the slide member and the guide member.

A wall section of a section of the cylinder body 31 of the clutch master cylinder 30 forming the oil chamber 31a has a pair of opening sections 31b, 31c passing therethrough. The opening sections 31b, 31c are both formed having a circular shape. The opening sections 31b, 31c are disposed in parallel with the stroke-motion direction of the piston 32 (that is, the axial direction) and with a fixed distance therebetween. The oil chamber 31a of the cylinder body 31 is connected via the opening sections 31b, 31c to each of the oil channels 38a, 38b of the connection section 38 provided as one with the cylinder body 31.

One of the opening sections 31b, provided at an end section side of the cylinder body 31, faces one of the oil channels 38a of the connection section 38. As the check valve 39a is provided in the oil channel 38a, the oil in the oil chamber 31a flows out to the clutch release cylinder 60 via the opening section 31b and the oil channel 38a. In contrast, the other opening section 31c provided at another end section side of the cylinder body 31, faces the other oil channel 38b of the connection section 38. As the check valve 39b is connected to the oil channel 38b, the oil from clutch release cylinder 60 flows into the oil chamber 31a via the oil channel 38b and the opening section 31c.

A slide member (that is, a movable member) 36 and a guide member 37 are provided inside the oil chamber 31a of the cylinder body 31.

The slide member 36 is a plate-like member mounted on and secured to a lower section of the piston 32, which is an end section of the side of the oil chamber 31a. The slide member 36 slides along a wall surface inside the cylinder body 31 in accordance with stroke motion of the piston 32. A lower surface of the slide member 36 is formed having an arced shape following an inner wall surface of the cylinder body 31 and makes contact with the inner wall surface. Meanwhile, an upper surface of the slide member 36 is formed as a level surface and makes contact with a lower surface of the guide member 37 disposed thereabove.

The slide member 36 is provided with an opening section 36a passing vertically therethrough. The opening section 36a is disposed within the slide member 36 so as to overlap the opening section 31c of the cylinder body 31. Furthermore, the oil chamber 31a is connected to the oil channel 38b of the connection section 38 via the opening section 36a and the opening section 31c.

The opening section 36a extends in the direction of stroke motion and is provided with substantially rectangular wide sections 36b, 36d at each end section in the direction of stroke motion and a substantially rectangular narrow section 36c being between both of the wide sections 36b, 36d. Here, the widths Wb, Wd of the wide sections 36b, 36d (that is, widths in a direction perpendicular to the direction of stroke motion and the piercing direction of the opening section (in this embodiment, vertical)) (see FIG. 6C) are equal. Furthermore, the width Wc (see FIG. 6A) of the narrow section 36c is smaller than the widths Wb, Wd of the wide sections 36b, 36d (that is, Wb = Wd > Wc).

The guide member 37 is a plate-like member for guiding motion of the slide member 36 inside the cylinder body 31 and is mounted on and secured to an inner wall of the cylinder body 31. The guide member 37 is disposed such that the slide member 36 is sandwiched between an inner wall of the cylinder body 31 and the guide member 37. More specifically, the guide member 37 is disposed so as to cover the opening section 36a of the slide member 36. Furthermore, the slide member 36 is inserted into a space formed between a bottom surface of the guide member 37 and an inner wall surface of the cylinder body 31. It should be noted that position of the guide member 37 is such that the stroke motion of the piston 32 is not obstructed.

An opening section 37a passing vertically through the guide member 37 is formed at a center section thereof. The opening section 37a is formed having the same shape as the opening section 31b of the cylinder body 31 and is disposed so as to overlap the opening section 31b of the cylinder body 31. In this embodiment, the opening section 37a of the guide member 37 is formed so as to be disposed in the same position as the opening section 31b of the cylinder body 31 in the direction of stroke motion and in a peripheral direction.

Hereinafter, a positional relationship of the opening section 31c of the cylinder body 31, the opening section 36a of the slide member 36 and the opening section 37a of the guide member 37 within the clutch master cylinder 30 are explained.

A length L1 (see FIG. 5) of the opening section 31c of the cylinder body 31 in the direction of stroke motion and a length L3 (see FIG. 4) of the opening section 37a of the guide member 37 in the direction of stroke motion are equal. In contrast to the aforementioned lengths L1, L3, a length L2 (see FIG. 4) of the opening section 36a of the slide member 36 in the direction of stroke motion is larger (that is, L2 > L1 = L3). It is preferable that the length L2 of the opening section 36a of the slide member 36 in the direction of stroke motion is the same as or larger than the size of the stroke motion of the piston 32 (that is, the distance from the position X1 to the position X2).

A width W1 (see FIG. 5) of the opening section 31c of the cylinder body 31 and a width W3 (see FIG. 5) of the opening section 37a of the guide member 37 are equal. The aforementioned widths Wb, Wd of the wide sections 36b, 36d of the opening section 36a of the slide member 36 are almost identical to the aforementioned widths W1, W3. Furthermore, in contrast to the aforementioned widths W1, W3, the width Wc of the narrow section 36c of the opening section 36a of the slide member 36 is smaller (that is, Wb = Wd ≈ W1 = W3 > Wc).

The opening section 31c of the cylinder body 31, the opening section 36a of the slide member 36, and the opening section 37a of the guide member 37 mutually overlap, forming a connecting channel Z1 (that is, the hatched section of FIG. 6A through FIG. 6E). Within the cylinder body 31, the position in the direction of stroke motion of the slide member 36 changes pursuant to the stroke motion of the piston 32, and therefore, the position of overlapping of the opening section 36a of the slide member 36 with the opening section 31c of the cylinder body 31 and the opening section 37a of the guide member 37 also changes. Consequently, the area of the connecting channel Z1 formed by overlapping of all opening sections 31c, 36a, 37a changes. That is to say, the area of the connecting channel Z1 changes in accordance with the stroke-motion position of the piston 32.

Specifically, when the opening section 31c of the cylinder body 31 and the opening section 37a of the guide member 37 are overlapped only with the wide sections 36b, 36d of the opening section 36a of the slide member 36, the aforementioned connecting channel Z1 is not constricted, and the area thereof is maximized at the area of the opening section 31c of the cylinder body 31. In contrast, when the opening section 31c of the cylinder body 31 and the opening section 37a of the guide member 37 are overlapped only with the narrow section 36c of the opening section 36a of the slide member 36, the aforementioned connecting channel Z1 is constricted, and the area thereof is minimized. Furthermore, when the opening section 31c of the cylinder body 31 and the opening section 37a of the guide member 37 are overlapped with the wide section 36b (or the wide section 36d) and the narrow section 36c of the opening section 36a of the slide member 36 in a straddled manner, the area of the aforementioned connecting channel Z1 changes gradually in accordance with the stroke·motion position of the piston 32.

More specifically, when the stroke-motion position of the piston 32 is at the end section side position X1 corresponding to the clutch full-disengagement condition, as shown in FIG. 6A, one of the wide section 36b of the opening section 36a of the slide member 36 is overlapped with the opening section 31c of the cylinder body 31 and the opening section 37a of the guide member 37. At this time, the full region of the opening section 31c of the cylinder body 31 and the opening section 37a of the guide member 37 is included within one of the wide sections 36b of the opening section 36a of the slide member 36. Therefore, the area of the aforementioned connecting channel Z1 at this time is maximized at the area of the opening section 31c of the cylinder body 31. Even if the stroke-motion position of the piston 32 moves from the position X1 towards the other end section side (that is, direction Y of FIG. 3), the aforementioned connecting channel Z1 is not constricted and remains maximized at the same area until a boundary section 36e between one of the wide sections 36b and the narrow section 36c of the opening section 36a of the slide member 36 becomes overlapped with the opening section 31c of the cylinder body 31 and the opening section 37a of the guide member 37.

Next, when the stroke-motion position of the piston 32 moves further towards the other end section side, as shown in FIG. 6B, the boundary section 36e between one of the wide sections 36b and the narrow section 36c of the opening section 36a of the slide member 36 becomes overlapped with the opening section 31c of the cylinder body 31 and the opening section 37a of the guide member 37. In this condition, the opening section 31c of the cylinder body 31 and the opening section 37a of the guide member 37 are overlapped with one of the wide sections 36b and the narrow section 36c of the opening section 36a of the slide member 36 in a straddled manner. As the stroke-motion position of the piston 32 moves closer to the other end section side, the overlapping section of the opening section 31c of the cylinder body 31 and the opening section 37a of the guide member 37 with the one of the wide sections 36b of the opening section 36a of the slide member 36 becomes smaller while the overlapping section thereof with the narrow section 36c becomes larger, and therefore, the aforementioned connecting channel Z1 becomes constricted and the area thereof decreases.

Next, when the stroke·motion position of the piston 32 moves towards the other end section side, as shown in FIG. 6C, the opening section 31c of the cylinder body 31 and the opening section 37a of the guide member 37 become overlapped only with the narrow section 36c of the opening section 36a of the slide member 36. At this time, the area of the aforementioned connecting channel Z1 is minimized, and although one section of the region of the opening section 31c of the cylinder body 31 and the opening section 37a of the guide member 37 is included within the narrow section 36c of the opening section 36a of the slide member 36, the remaining section thereof is not included in the narrow section 36c. Even if the stroke-motion position of the piston 32 moves towards the other end section side, the aforementioned connecting channel Z1 remains constricted at the minimum area thereof until a boundary section 36f between the narrow section 36c and the other of the wide sections 36d of the opening section 36a of the slide member 36 becomes overlapped with the opening section 31c of the cylinder body 31 and the opening section 37a of the guide member 37.

Next, when the stroke·motion position of the piston 32 moves further towards the other end section side, as shown in FIG. 6D, the boundary section 36f between the narrow section 36c and the other of the wide sections 36d of the opening section 36a of the slide member 36 becomes overlapped with the opening section 31c of the cylinder body 31 and the opening section 37a of the guide member 37. In this condition, the opening section 31c of the cylinder body 31 and the opening section 37a of the guide member 37 are overlapped with the narrow section 36c and the other of the wide sections 36d of the opening section 36a of the slide member 36 in a straddled manner. When the closer the stroke-position of the piston 32 moves to the other end section side, as the overlapping section of the opening section 31c of the cylinder body 31 and the opening section 37a of the guide member 37 with the narrow section 36c of the opening section 36a of the slide member 36 becomes smaller while the overlapping section thereof with the other of the wide sections 36d becomes larger, the area of the aforementioned connecting channel Z1 increases.

Next, when the stroke-motion position of the piston 32 moves to the other end section side, as shown in FIG. 6E, the opening section 31c of the cylinder body 31 and the opening section 37a of the guide member 37 become overlapped only with the other of the wide sections 36d of the opening section 36a of the slide member 36. At this time, the full region of the opening section 31c of the cylinder body 31 and the opening section 37a of the guide member 37 is included within the other of the wide sections 36d of the opening section 36a of the slide member 36, and the area of the aforementioned connecting channel Z1 is maximized. The aforementioned connecting channel Z1 is not constricted and remains maximized at the same area until the stroke-motion position of the piston 32 moves to the other end section side position X2 corresponding to the clutch full-engagement condition.

In this embodiment, the area of the aforementioned connecting channel Z1 changes in accordance with the stroke-motion position of the piston 32 in the clutch master cylinder 30 of the clutch operation device 10, and therefore, when an engagement operation of the clutch is performed, the operational advantage explained hereinafter can be achieved.

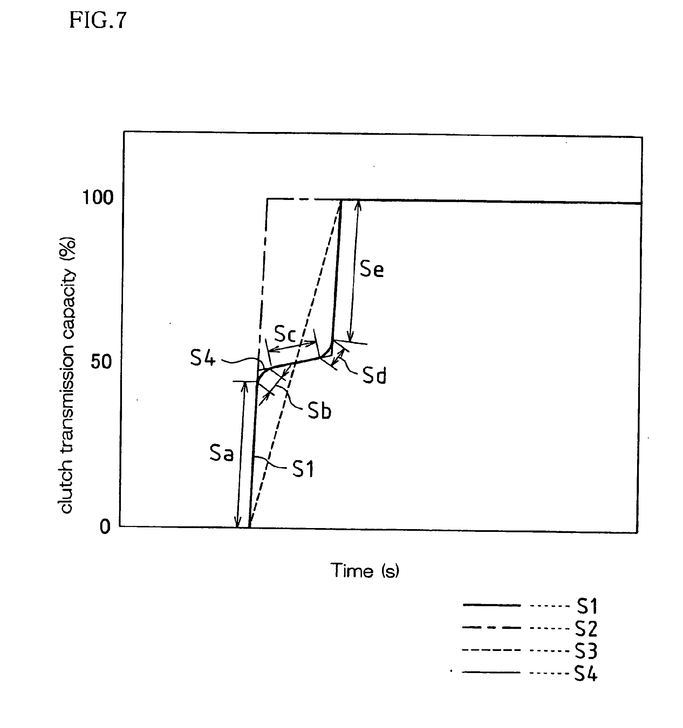

As explained above, when the depression operation force applied by the driver to the clutch pedal 20 decreases, resulting in an engagement operation of the clutch, oil returns from the clutch release cylinder 60 to the clutch master cylinder 30 via the flexible hose 40. At this time, oil flows into the oil chamber 31a of the cylinder body 31 of the clutch master cylinder 30 via the aforementioned connecting channel Z1. The area of the connecting channel Z1 changes in accordance with the stroke-motion position of the piston 32, and therefore, the volume of oil per unit time (hereinafter referred to as the "flow rate") flowing into the oil chamber 31a of the clutch master cylinder 30 also changes. Consequently, the clutch engages as shown in FIG. 7. FIG. 7 shows the changes over time in the degree of clutch engagement (that is, the clutch transmission capacity) from the full-disengagement condition (that is, a condition wherein the clutch transmission capacity is 0%) to the full-engagement condition (that is, a condition wherein the clutch transmission capacity is 100%). In FIG. 7, the clutch engagement profile of this embodiment is shown by the bold line S1.

First of all, when the clutch begins to move from the full-disengagement condition to the full-engagement condition, the stroke-motion position of the piston 32 corresponds to the end section side position X1. At this time, as shown in FIG. 6A, the area of the aforementioned connecting channel Z1 is maximized. While the area of the aforementioned connecting channel Z1 is maximized, the flow rate of oil into the oil chamber 31a of the master cylinder 30 also remains maximized, even if the stroke-motion position of the piston 32 moves from the position X1 towards the other end section side, and therefore, as shown by the inclined section Sa of FIG. 7, the degree of clutch engagement increases at maximum speed. That is to say, the speed of clutch engagement is maximized.

Next, when the stroke-motion position of the piston 32 moves further towards the other end section side and, as shown in FIG. 6B, the area of the aforementioned connecting channel Z1 becomes gradually smaller, the flow rate of oil into the oil chamber 31a of the master cylinder 30 gradually decreases. Consequently, as shown by the inclined section Sb of FIG. 7, the speed of increase of the degree of clutch engagement gradually decreases. That is to say, the speed of clutch engagement gradually decreases.

Next, when the stroke-motion position of the piston 32 moves further towards the other end section side and, as shown in FIG. 6C, the area of the aforementioned connecting channel Z1 is minimized, the flow rate of oil into the oil chamber 31a of the master cylinder 30 is minimized. While the area of the aforementioned connecting channel Z1 is minimized, the flow rate of oil into the oil chamber 31a of the master cylinder 30 also remains minimized, even if the stroke-motion position of the piston 32 moves to the other end section side, and therefore, as shown by the inclined section Sc of FIG. 7, the degree of clutch engagement increases at minimum speed. That is to say, the speed of clutch engagement is minimized.

Next, when the stroke-motion position of the piston 32 moves further towards the other end section side and, as shown in FIG. 6D, the area of the aforementioned connecting channel Z1 becomes gradually larger, the flow rate of oil into the oil chamber 31a of the master cylinder 30 gradually increases. Consequently, as shown by the inclined section Sd of FIG. 7, the speed of increase of the degree of clutch engagement gradually increases. That is to say, the speed of clutch engagement gradually increases.

Next, when the stroke-motion position of the piston 32 moves further towards the other end section side and, as shown in FIG. 6E, the area of the aforementioned connecting channel Z1 is maximized, the flow rate of oil into the oil chamber 31a of the master cylinder 30 is maximized. As the area of the aforementioned connecting channel Z1 remains maximized until the stoke-motion position of the piston moves to the other end section side position X2, the flow rate of oil into the oil chamber 31a of the master cylinder 30 also remains maximized. Consequently, as shown by the inclined section Se of FIG. 7, the degree of clutch engagement increases at maximum speed and the clutch achieves the full-engagement condition.

In a case wherein no constriction is provided in the connecting channel leading to the oil chamber 31a of the clutch master cylinder (hereinafter referred to as the "no constriction case"), as shown by the dotted and dashed line S2 of FIG. 7, the degree of clutch engagement increases at a uniform speed from the clutch full-disengagement condition to the clutch full-engagement condition. Furthermore, in a case wherein the area of the connecting channel leading to the oil chamber 31a of the clutch master cylinder is constricted using a fixed orifice (hereinafter referred to as the "constriction case"), as shown by the dashed line S3 of FIG. 7, the degree of clutch engagement increases from the clutch full-disengagement condition to the clutch full-engagement condition at a uniform speed slower than that of the no constriction case.

In this embodiment, the degree of clutch engagement does not increase uniformly at the same speed from the clutch full- disengagement condition to the clutch full-engagement condition, and the clutch engagement profile changes as shown by a stepped pattern of FIG. 7. In the case of a sudden standing start, for example, even if the driver suddenly releases the depression operation of the clutch pedal 20 and the clutch is suddenly engaged, the clutch does not immediately switch from the full-disengagement condition to the full-engagement condition, and the clutch reaches the full-engagement condition gently via the inclined sections Sb, Sc, Sd of FIG. 7.

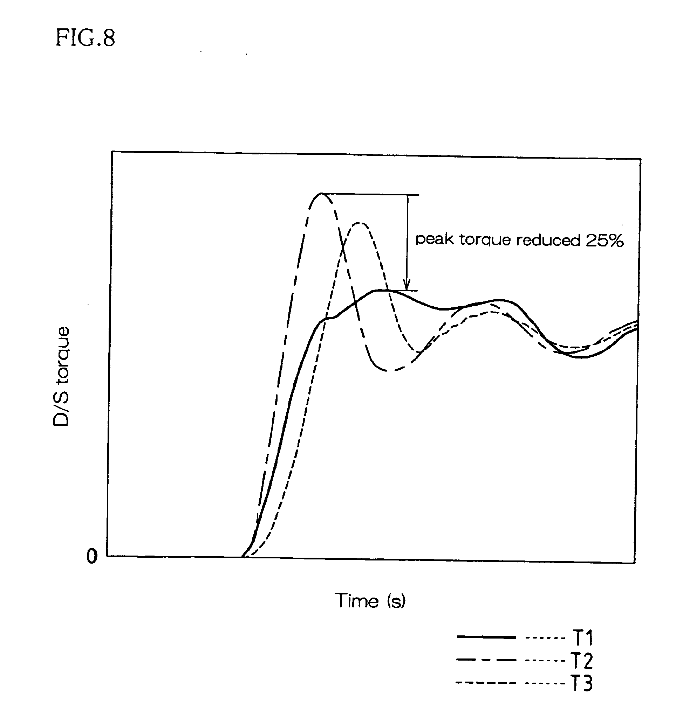

As a result thereof, it is possible, as shown in **FIG. 8****,** to reduce the peak torque input to the transmission and other components of the vehicle's torque transmission system when the clutch is suddenly engaged. FIG. 8 is a view showing the changes over time in the torque (in this case, the driveshaft torque (D/S torque)) input to the vehicle's torque transmission system when the clutch is suddenly engaged. In FIG. 8, the solid line T1 corresponds to this embodiment, the dotted and dashed line T2 corresponds to the no constriction case shown by the dotted and dashed line S2 of FIG. 7, and the dashed line S3 corresponds to the constriction case shown by the dashed line S3 of FIG. 7.

In this embodiment, as shown in FIG. 8, the peak torque input to the transmission, etc. when the clutch is suddenly engaged can be reduced with respect to the no constriction case and the constriction case. Specifically, in contrast to the no constriction case, the peak torque can be reduced by approximately 25%. As a result thereof, the shock pursuant to sudden clutch engagement can be reduced without the need for complicated constructions or control. Furthermore, as the aforementioned connecting channel Z1 is not constricted and the area thereof remains maximized immediately after the start of a clutch engagement operation, in contrast to the constriction case, the torque input to the transmission, etc. immediately after the start of a clutch engagement operation can be quickly increased. As a result thereof, excellent response can be assured when the vehicle is moved off.

In this embodiment, as the flow rate of oil into the oil chamber 31a of the clutch master cylinder 30 is set by changing the area of the aforementioned connecting channel Z1 through optimization of the shape of the opening section 36a of the slide member 36, this setting of the oil flow rate can be achieved in a simpler manner than that of the construction of the convention technology. In contrast to the construction of the conventional technology, furthermore, there is no need for the separate provision of springs, etc. for changing of the area of the aforementioned connecting channel Z1. In addition, there is also no need for complicated designs of seals, etc. in close proximity to the aforementioned connecting channel Z1. Furthermore, as the construction is such that the slide member 36 slides with respect to the cylinder body 31 and the guide member 37, the contact wear thereof can be reduced, and the lifespan thereof can be extended.

As upward motion of the slide member 36 is restricted by the guide member 37, lifting of the slide member 36 can be prevented when oil returns to the oil chamber 31a of the clutch master cylinder 30 via the aforementioned connecting channel Z1. As a result, the flow rate of the oil flowing into the oil chamber 31a of the clutch master cylinder 30 via the aforementioned connecting channel Z1 can be reliably and accurately controlled.

Furthermore, as the opening section 37a of the guide member 37 and the opening section 31c of the cylinder body 31 are disposed in the same location in the direction of stroke motion and in a peripheral direction, the flow of oil into the oil chamber 31a of the clutch master cylinder 30 is not blocked by the guide member 37. As a result, oil can flow smoothly into the oil chamber 31a of the clutch master cylinder 30.

Although an embodiment of the clutch operation device according to the present invention was explained above, the explained embodiment may be subjected to a wide range of changes.

If the construction can be configured having a clutch engagement profile similar to the stepped pattern shown by the heavy line S1 of FIG. 7, the shape, location, etc. of the components of the clutch master cylinder 30 are not limited to the above-explained case and may be subjected to a wide range of changes.

In contrast to the end sections of the opening section 36a of the slide member 36, the section being between both of the end sections may be constricted, and the width of the opening section 31c of the cylinder body 31 and the width of the opening section 37a of the guide member 37 may be larger than the width of that section. For this purpose, for example, the shape, width, length, etc. of the opening section 31c of the cylinder body 31, the opening section 37a of the guide member 37, and the wide sections 36b, 36d and the narrow section 36c of the opening section 36a of the slide member 36 may be changed. Here, the smaller the width of the narrow section 36c of the opening section 36a of the slide member 36, the smaller the speed of increase of clutch engagement degree, and the less steep the slope of the section shown by the inclined section Sc of FIG. 7. Furthermore, the closer the boundary section 36e between the narrow section 36c and one of the wide sections 36b of the opening section 36a of the slide member 36 is disposed to the other end section side (that is, direction Y in FIG. 3), the earlier the section shown by the inclined section Sc of FIG. 7 will start. Meanwhile, the closer the boundary section 36f between the narrow section 36c and the other of the wide sections 36d of the opening section 36a of the slide member 36 is disposed to the end section side, the later the section shown by the inclined section Sc of FIG. 7 will end.

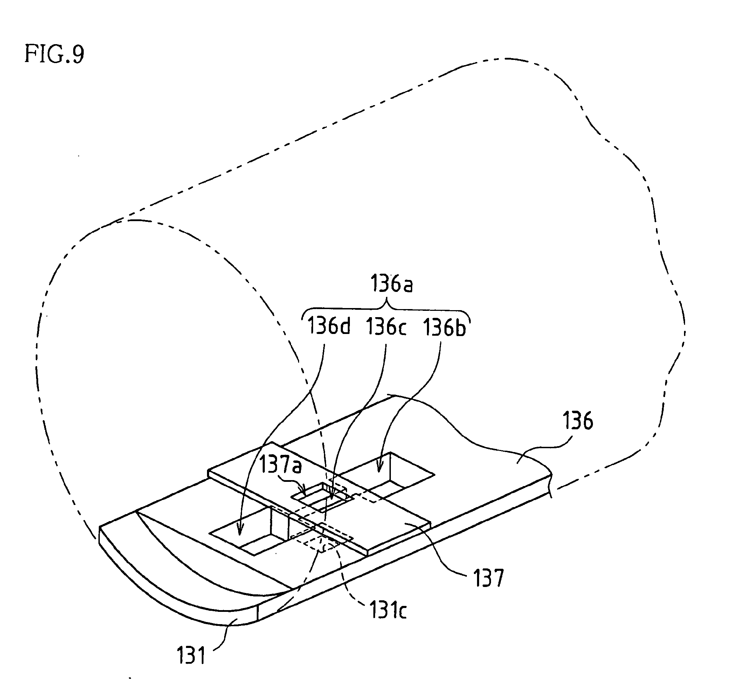

The wide sections 36b, 36d and the narrow section 36c of the opening section 36a of the slide member 36 may be of a shape other than substantially rectangular. Furthermore, the opening section 31c of the cylinder body 31 and the opening section 37a of the guide member 37 may be of a shape other than a circle. For example, as shown in FIG. 9, an opening section 131c of a cylinder body 131, an opening section 137a of a guide member 137, and wide sections 136b, 136d and a narrow section 136c of an opening section 136a of a slide member 136 may all be rectangular in shape. In such a case, opening edges of the wide sections 136b, 136d of the opening section 136a of the slide member 136 disposed on the side of the narrow section 136c extend in a transverse direction, and furthermore, opening edges on the side of both ends of the opening section 131c of the cylinder body 131 and the opening section 137a of the guide member 137 in the direction of stroke motion extend in a transverse direction.

As a result, the period becomes shorter during which the opening section 131c of the cylinder body 131 and the opening section 137a of the guide member 137 are overlapped with the wide sections 136b, 136d and the narrow section 136c of the opening section 136a of the slide member 136 in a straddled manner. That is to say, the period of change of the area of the connecting channel formed by overlapping of the opening section 131c of the cylinder body 131, the opening section 136a of the slide member 136, and the opening section 137a of the guide member 137 becomes shorter. As a result thereof, the inclined section Sb and the inclined section Sd of FIG. 7 become smaller, and the clutch engagement profile can be made to approach the stepped pattern shown by the thin line S4 of FIG. 7. Consequently, reduction of shock pursuant to sudden clutch engagement and excellent responsiveness upon standing starts can both be achieved.

In this case, the shorter the length of the opening section 131c of the cylinder body 131 and the opening section 137a of the guide member 137 in the direction of stroke motion, the shorter the period of change of the area of the aforementioned connecting channel, and the closer the clutch engagement profile can be made to approximate the stepped pattern shown by the thin line S4 of FIG. 7. Consequently, a further reduction of shock pursuant to sudden clutch engagement and better responsiveness upon standing starts can both be achieved.

A configuration omitting the guide member 37 may also be used. Specifically, the clutch operation device may be such that the area of the connecting channel formed by mutual overlapping of the opening section 31c of the cylinder body 31 and the opening section 36a of the slide member 36 can change in accordance with the stroke-motion position of the piston 32 of the clutch master cylinder 30.

A configuration other than the above-explained plate-like guide member 37 may be used as a guide means for guiding the motion of the slide member 36. For example, a guide channel wherein an end section of the slide member 36 can be inserted may be provided extending in the direction of stroke motion along an inner wall of the cylinder body 31, and the configuration may be such that the slide member 36 is moved along the guide channel. Furthermore, a guide channel and a plate-like guide member can be used together as a guide means.

An opening section with a large length in the direction of stroke motion and having a wide section and a narrow section can be provided in the cylinder body 31, and an opening section with a small length in the direction of stroke motion can be provided in the slide member 36. That is to say, although the flow rate of oil returning to the oil chamber 31a is set in accordance with the position of the stroke motion of the piston in the above-explained example by optimizing the shape of the opening section 36a of the slide member 36, the flow rate of oil returning to the oil chamber 31a can also be set in accordance with the position of the stroke motion of the piston by optimizing the shape of the opening section of the cylinder body 31.

If the opening section 37a of the guide section 37 does not obstruct the flow of oil into the oil chamber 31a of the clutch master cylinder 30, the shape, size, etc. thereof is not restricted. That is to say, the full region of the opening section 31c of the cylinder body 31 may be included within the opening section 37a of the guide member 37.

Although the above example was explained in terms of application of the clutch master cylinder of the clutch operation device according to the present invention, the clutch release cylinder of the clutch operation device can also be applied with regard to the present invention, and in such case, the same operational advantage can be achieved. In a case where the clutch release cylinder is applied, the configuration is such that the flow rate of oil flowing from an oil chamber inside a cylinder body into a flexible hose is set in accordance with the stroke motion position of a piston.

A configuration not comprising a clutch release cylinder can be used as a clutch operation device. Furthermore, a direct-type cylinder moving the clutch cover directly and not via a release fork can also be used as the clutch release cylinder of the clutch operation device.

It should be noted that without departure from the intention and principal characteristics thereof, the present invention can have many other embodiments. Accordingly, the above-described embodiments are no more than simple examples and should not be interpreted in a limited manner. The scope of the present invention is set forth by the scope of the claims, and the disclosure is in no way binding. Furthermore, all modifications and changes within a scope equivalent to that of the claims are within the scope of the present invention.

## Claims

1. A clutch operation device (10) engaging and disengaging a clutch, transmitting and cutting-off drive force from a drive source, by way of transmission of operation force by a hydraulic cylinder, wherein:
the hydraulic cylinder comprises a cylinder body (31) having formed on a wall surface thereof an opening section connecting an oil chamber (31a) and an oil channel (38a, 38b) returning oil from a clutch side, a piston capable of performing stroke motion inside the cylinder body between an end section side corresponding to a clutch full-disengagement condition and another end section side corresponding to a clutch full-engagement condition, and a moveable member fixed to the piston and moving along the wall surface inside the cylinder body pursuant to the stroke motion of the piston;
the moveable member is provided with an opening section (36a) connecting to the oil chamber at a position of overlapping thereof with the opening section of the cylinder body; and
an area of a connecting channel formed by mutual overlapping of the opening section of the cylinder body and the opening section of the moveable member becomes smaller when a stroke-motion position of the piston is between both of the end sections than when the stroke-motion position of the piston is at either end section, wherein:
within the cylinder body, a guide means (37) for guiding the motion of the moveable member is provided, and the moveable member is sandwiched between the guide means and an inner wall of the cylinder body.

2. The clutch operation device of claim 1, wherein:
one opening section of the opening section of the cylinder body and the opening section of the moveable member is formed so as to extend in the direction of stroke motion of the piston, and the one opening section is provided with a wide section at both ends thereof in the direction of stroke motion and a narrow section being between both of the wide sections; and
a width of the other opening section of the opening section of the cylinder body and the opening section of the moveable member is larger than the width of the narrow section of the one opening section.

3. The clutch operation device of claim 2, wherein:
the opening edges of both of the wide sections of the one opening section on the side of the narrow section are formed so as to extend in a transverse direction; and
the opening edges on the side of both ends of the other opening section in the direction of stroke motion of the piston are formed so as to extend in a transverse direction.

4. The clutch operation device of claim 2 or claim 3, wherein:
both of the wide sections of the one opening section and the other opening section are formed having a rectangular shape.

5. The clutch operation device of any of claims 2 to 4, wherein:
the one opening section is the opening section of the moveable member and the other opening section is the opening section of the cylinder body.

6. The clutch operation device of any preceding claim, wherein:
the guide means comprises a plate-like member provided so as to cover the opening section of the moveable member;
the plate-like member is fixed to the cylinder body; and
an opening section is formed in the plate-like member and the full region of the opening section of the cylinder body is contained within the opening section of the plate-like member.

## Patentansprüche

1. Kupplungsbetätigungsvorrichtung (10), die eine Kupplung ein- und auskuppelt, und eine Antriebskraft von einer Antriebsquelle überträgt und unterbricht durch Übertragen einer Betätigungskraft durch einen Hydraulikzylinder, wobei
der Hydraulikzylinder einen Zylinderkörper (31), welcher einen Öffnungsabschnitt, der an einer Wandfläche dessen ausgebildet ist und eine Ölkammer (31a) und einen Ölkanal (38a, 38b), welcher Öl von einer Kupplungsseite zurückführt, verbindet, einen Kolben, der eine Hubbewegung innerhalb des Zylinderkörpers zwischen einer Endabschnittseite, welche einen Zustand einer komplett ausgekuppelten Kupplung entspricht, und einer anderen Endabschnittseite, welche einen Zustand einer komplett eingekuppelten Kupplung entspricht, durchführen kann, und ein bewegliches Teil, das an dem Kolben befestigt ist und sich entlang der Wandfläche innerhalb des Zylinderkörpers gemäß der Hubbewegung des Kolbens bewegt;
das bewegliche Teil mit einem Öffnungsabschnitt (36a) versehen ist, welcher mit der Ölkammer an einer Stelle verbundne ist, wenn dieser mit dem Öffnungsabschnitt des Zylinderkörpers überlappt; und
eine Fläche eines Verbindungskanals, der durch beidseitiges Überlappen des Öffnungsabschnitts des Zylinderkörpers und des Öffnungsabschnitts des beweglichen Teils kleiner wird, wenn eine Hubbewegungsposition des Kolbens zwischen beiden Endabschnitten ist, als wenn die Hubbewegungsposition des Kolbens an einem der beiden Endabschnitte ist, wobei
innerhalb des Zylinderkörpers eine Führungseinrichtung (37) zum Führen der Bewegung des beweglichen Teils vorgesehen ist und das bewegliche Teil zwischen der Führungseinrichtung und einer Innenwand des Zylinderkörpers zwischengeschaltet ist.

2. Kupplungsbetätigungsvorrichtung nach Anspruch 1, wobei
ein Öffnungsabschnitt des Öffnungsabschnitts des Zylinderkörpers und des Öffnungsabschnitts des beweglichen Körpers so ausgebildet ist, dass er sich in Richtung der Hubbewegung des Kolbens erstreckt und dieser eine Öffnungsabschnitt mit einem weiten Abschnitt an beiden Enden der Hubbewegung und einem engen Abschnitt zwischen beiden weiten Abschnitten versehen ist; und
eine Weite des anderen Öffnungsabschnitts des Öffnungsabschnitts des Zylinderkörpers und des Öffnungsabschnitts des beweglichen Teils größer als die Weite des engen Abschnitts des einen Öffnungsabschnitts ist.

3. Kupplungsbetätigungsvorrichtung nach Anspruch 2, wobei
die Öffnungskanten von beiden weiten Abschnitten des einen Öffnungsabschnitts auf der Seite des engen Abschnitts so ausgebildet sind, dass sie sich in Querrichtung erstrecken; und
die Öffnungskanten auf der Seite beider Enden des anderen Öffnungsabschnitts in Richtung der Hubbewegung des Kolbens so ausgebildet sind, dass sie sich in Querrichtung erstrecken.

4. Kupplungsbetätigungsvorrichtung nach Anspruch 2 oder 3, wobei
beide weiten Abschnitte des einen Öffnungsabschnitts und der andere Öffnungsabschnitt rechteckförmig ausgebildet sind.

5. Kupplungsbetätigungsvorrichtung nach einem der Ansprüche 2 bis 4, wobei
der eine Öffnungsabschnitt der Öffnungsabschnitt des beweglichen Teils ist und der andere Öffnungsabschnitt der Öffnungsabschnitt des Zylinderkörpers ist.

6. Kupplungsbetätigungsvorrichtung nach einem der vorhergehenden Ansprüche, wobei
die Führungseinrichtung ein plattenähnliches Element aufweist, welches vorgesehen ist, um den Öffnungsabschnitt des beweglichen Teils abzudecken;
das plattenähnliche Element an dem Zylinderkörper befestigt ist; und
ein Öffnungsabschnitt in dem plattenähnlichen Element ausgebildet ist und der volle Bereich des Öffnungsabschnitts des Zylinderkörpers innerhalb des Öffnungsabschnitts des plattenähnlichen Elements enthalten ist.

## Revendications

1. Dispositif (10) de commande d'un embrayage engageant et désengageant un embrayage, transmettant et déconnectant une force d'entraînement provenant d'une source d'entraînement, au moyen de la transmission d'une force de commande par un cylindre hydraulique, dans lequel :
le cylindre hydraulique comprend un corps de cylindre (31) sur une surface de paroi duquel est formée une section d'ouverture reliant une chambre d'huile (31a) et un canal d'huile (38a, 38b) ramenant de l'huile provenant d'un côté embrayage, un piston capable d'effectuer un mouvement de course à l'intérieur du corps de cylindre entre un côté de section d'extrémité correspondant à un état de désengagement complet de l'embrayage et un autre côté de section d'extrémité correspondant à un état d'engagement complet de l'embrayage, et un organe déplaçable fixé au piston et se déplaçant le long de la surface de paroi à l'intérieur du corps de cylindre suite au mouvement de course du piston ;
l'organe déplaçable est pourvu d'une section d'ouverture (36a) se raccordant à la chambre d'huile au niveau d'une position de chevauchement de celle-ci avec la section d'ouverture du corps de cylindre ; et
une zone d'un canal de raccordement formée par un chevauchement mutuel de la section d'ouverture du corps de cylindre et de la section d'ouverture de l'organe déplaçable devient plus petite lorsqu'une position de mouvement de course du piston est située entre les deux sections d'extrémité que lorsque la position de mouvement de course du piston est à l'une ou l'autre des sections d'extrémité, dans lequel :
à l'intérieur du corps de cylindre, un moyen de guidage (37) pour guider le mouvement de l'organe déplaçable est prévu, et l'organe déplaçable est pris en sandwich entre le moyen de guidage et une paroi intérieure du corps de cylindre.

2. Dispositif de commande d'un embrayage selon la revendication 1, dans lequel :
une section d'ouverture parmi la section d'ouverture du corps de cylindre et la section d'ouverture de l'organe déplaçable est formée de manière à s'étendre dans la direction du mouvement de course du piston, et ladite section d'ouverture est pourvue d'une section large à ses deux extrémités dans la direction du mouvement de course et une section étroite étant située entre les deux sections larges ; et
une largeur de l'autre section d'ouverture parmi la section d'ouverture du corps de cylindre et la section d'ouverture de l'organe déplaçable est plus grande que la largeur de la section étroite de ladite section d'ouverture.

3. Dispositif de commande d'un embrayage selon la revendication 2, dans lequel :
les bords d'ouverture des deux sections larges de ladite section d'ouverture du côté de la section étroite sont formés de manière à s'étendre dans une direction transversale ; et
les bords d'ouverture sur le côté des deux extrémités de l'autre section d'ouverture dans la direction du mouvement de course du piston sont formés de manière à s'étendre dans une direction transversale.

4. Dispositif de commande d'un embrayage selon la revendication 2 ou la revendication 3, dans lequel les deux sections larges de ladite section d'ouverture et de l'autre section d'ouverture sont formées avec une forme rectangulaire.

5. Dispositif de commande d'un embrayage selon l'une quelconque des revendications 2 à 4, dans lequel :
ladite section d'ouverture est la section d'ouverture de l'organe déplaçable et l'autre section d'ouverture est la section d'ouverture du corps de cylindre.

6. Dispositif de commande d'un embrayage selon l'une quelconque des revendications précédentes, dans lequel :
le moyen de guidage comprend un organe de type plaque prévu de manière à couvrir la section d'ouverture de l'organe déplaçable ;
l'organe de type plaque est fixé au corps de cylindre ; et
une section d'ouverture est formée dans l'organe de type plaque et la région complète de la section d'ouverture du corps de cylindre est contenue dans la section d'ouverture de l'organe de type plaque.
